# FASCICULE DE BREVET EUROPEEN

(11) **EP 0 781 936 B1**
(45) Date de publication et mention de la délivrance du brevet: **21.03.2001**
(21) Numéro de dépôt: 96402917.7
(22) Date de dépôt: 27.12.1996
(51) Int. Cl.: F16D 66/02

(54) **Témoin d'usure de garniture de friction, notamment de plaquette de frein**
Verschleisssensor für einen Reibbelag, insbesondere für einen Bremsbelag
Wear sensor for friction lining, particularly for a brake pad

(30) Priorité: 27.12.1995 FR 9515547
(43) Date de publication de la demande: 02.07.1997
(73) Titulaire: COMPAGNIE PLASTIC OMNIUM, 69007 Lyon (FR)
(72) Inventeur: de Montfalcon, Paul, 75015 Paris (FR); Schosseler, René, 95100 Argenteuil (FR)
(74) Mandataire: Leszczynski, André

(56) Documents cités:
- EP-A- 0 594 515
- EP-A- 0 634 586
- EP-A- 0 754 875
- DE-A- 4 117 423
- DE-C- 3 132 954
- DE-C- 3 204 305
- FR-A- 2 663 703

## Description

La présente invention concerne un témoin d'usure de garniture de friction, notamment de plaquette de frein.

On connaît déjà des témoins d'usure de garnitures de friction, notamment de plaquette de frein, qui comportent un embout en matière plastique apte à recevoir l'extrémité d'un fil conducteur électrique.

Un tel embout peut être soit assujetti à une plaque-support à côté d'une garniture de friction, soit introduit dans cette garniture de friction.

Dans certains cas, les embouts de témoins d'usure doivent présenter des propriétés particulières qui sont, a priori, contradictoires.

En effet, d'une part, il est souhaitable que les embouts présentent une élasticité suffisante afin de pouvoir s'encliqueter sur la plaque-support ou dans la garniture de friction et afin de pouvoir immobiliser le fil conducteur électrique dans des moyens de retenue élastiques n'utilisant ni colle ni pièces additives telles que des ressorts ou des clips, lesquels présentent une tenue en température insuffisante pour un tel usage et entraînent un surcoût que l'on cherche à éviter.

Mais, d'autre part, les témoins d'usure doivent pouvoir résister à de fortes élévations de température compte-tenu des échauffements importants qui se produisent dans les garnitures de friction lors de leur fonctionnement.

Or, on ne connaît pas de matériau qui réunisse ces deux propriétés d'élasticité et de tenue en température, les seuls matériaux utilisés jusqu'à ce jour pour réaliser des embouts de témoins d'usure qui soient susceptibles de résister de manière fiable à de fortes élévations de températures étant des matières plastiques thermodurcissables, des céramiques ou des alliages métalliques, lesquels présentent une très faible, voire aucune élasticité.

Du brevet allemand 32 04 305, on connait déjà un témoin d'usure conforme au préambule de la revendication 1.

Ce témoin d'usure présente l'inconvénient de comporter trois pièces, à savoir une partie proche de la surface d'usure de la garniture de friction, une partie éloignée de cette surface d'usure et une pièce de fixation en métal, par exemple en laiton, qui assure la fixation par clipsage des deux parties précédentes sur une plaque-support.

La présence de cette pièce de fixation rend le témoin d'usure coûteux à fabriquer et peut poser des problèmes de transmission de la chaleur dégagée lors d'un freinage à la partie éloignée de la surface d'usure, à travers la partie proche de cette surface d'usure.

La présente invention vise à fournir un témoin d'usure de garniture de friction qui, tout en étant d'un mode de réalisation particulièrement simple et économique, allie les avantages d'une bonne tenue en température et d'une bonne élasticité, sans présenter les inconvénients du témoin d'usure connu.

Du document EP-A-0754875 qui fait partie de l'état de la technique en vertu des articles 54(3) et (4) CBE, on connaît un témoin d'usure.

Dans ce document, le conducteur électrique est une broche de contact bipolaire.

Selon l'invention, le conducteur électrique est un fil électrique avec une boucle d'extrémité conductrice apte à être retenue dans la partie du témoin d'usure la plus éloignée de la surface d'usure de la garniture de friction.

Selon l'invention, on entend par hautes températures des températures au moins égales à environ 380°C.

Le matériau résistant à de hautes températures doit, selon l'invention, résister mécaniquement à la pression du disque de freinage ou d'une manière plus générale à toute sollicitation mécanique due à l'utilisation de la garniture de friction.

De préférence, la partie la plus éloignée de la surface définit une embase pour recevoir l'extrémité du fil conducteur électrique.

Ainsi, on évite le surmoulage compliqué et imprécis de la câblerie du témoin d'usure.

On comprend que le témoin d'usure selon l'invention résout les problèmes rappelés ci-dessus d'une manière particulièrement efficace, à la différence des solutions proposées jusqu'à ce jour qui reposaient sur l'utilisation de matériaux réalisant un compromis entre des caractéristiques idéales d'élasticité et de tenue en température.

Le témoin d'usure selon l'invention présente en outre l'avantage d'être économiquement intéressant du fait qu'il n'utilise des matériaux coûteux aptes à résister à de hautes températures que dans de faibles proportions, c'est-à-dire seulement pour réaliser la partie de l'embout la plus proche de la surface d'usure de la garniture, tandis que, pour réaliser la partie de l'embout la plus éloignée de la surface d'usure de la garniture, des matériaux élastiques bon marché peu résistants en température peuvent être utilisés, précisément grâce à la présence d'un écran thermique sur l'embout.

En d'autres termes, bien que l'écran thermique soit réalisé en un matériau coûteux, l'économie réalisée sur la partie du connecteur éloignée de la surface d'usure de la garniture permet d'aboutir à un prix de revient global tout à fait compétitif.

Dans le but de mieux faire comprendre l'invention, on va en décrire maintenant des modes de réalisation donnés à titre d'exemples non limitatifs, en référence au dessin annexé dans lequel :
- la figure 1 est une vue en perspective éclatée d'un témoin d'usure selon un premier mode de réalisation de l'invention,
- la figure 2 est une vue en perspective éclatée d'un témoin d'usure selon un deuxième mode de réalisation de l'invention,
- la figure 3 est une vue en perspective éclatée d'un témoin d'usure selon un troisième mode de réalisation de l'invention.

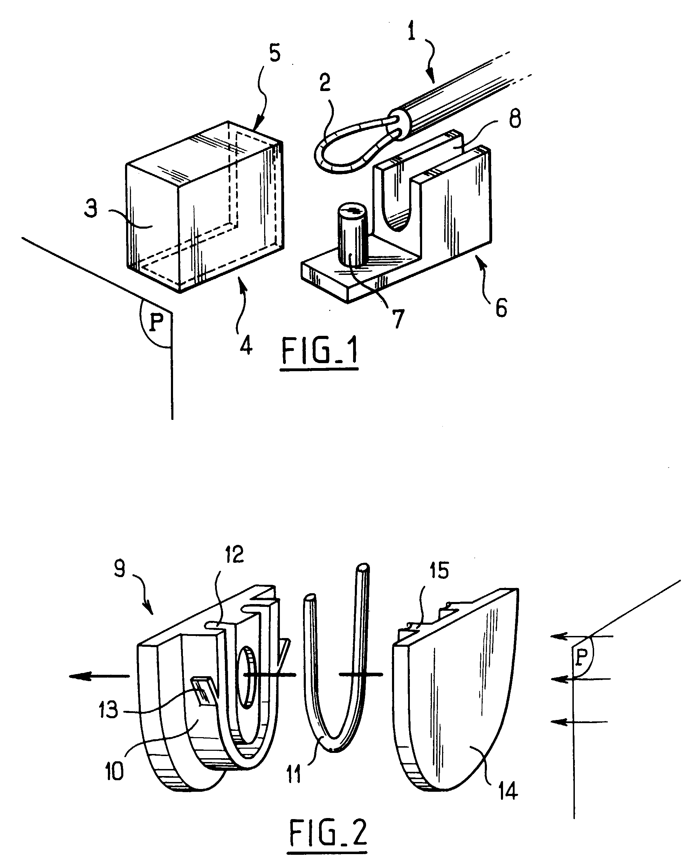

Sur la figure 1, on a représenté l'extrémité d'un fil conducteur électrique 1 constitué par une boucle conductrice 2 qui permet de réaliser un connecteur connu sous le nom de connecteur bifilaire.

Un écran thermique 3, réalisé en céramique, en matériau connu sous la dénomination de VESPEL ou en résine phénolique, présente la forme d'un parallélépipède rectangle, creux et ouvert sur ses faces inférieure 4 et arrière 5 par rapport au dessin.

Cet écran thermique constitue la partie du connecteur la plus proche de la surface d'usure de la garniture, laquelle est matérialisée sur la figure 1 par un plan P.

La partie du connecteur la plus éloignée de la surface d'usure est constituée par une embase moulée 6 en polyéthercétone (PEK), en polyétheréthercétone (PEEK) ou en polyamide aromatique (PAA) comportant, à sa partie avant, un plot de retenue 7 pour la boucle d'extrémité 2 du fil conducteur électrique et, à sa partie arrière, un canal ouvert 8 apte à recevoir la partie gainée du fil 1.

Des moyens élastiques sont constitués par des ergots élastiques 6a qui, étant réalisés en un matériau élastique, peuvent remplir pleinement leur fonction qui est de fixer l'embout sur la plaque-support.

On comprend que, lorsque l'écran thermique 3 est positionné sur l'embase 6, le fil conducteur électrique 1 ainsi que la majeure partie de l'embase 6 sont protégés vis-à-vis d'une élévation de température de la surface d'usure de la garniture de friction.

Le mode de fixation de l'écran thermique sur l'embase peut-être un encliquetage ou tout autre moyen approprié.

Dans le mode de réalisation de la figure 2, l'embase 9 se présente sous la forme d'une plaque semi-circulaire sur laquelle est formée une zone de réception 10 d'un fil conducteur électrique 11 en boucle.

Cette zone de réception 10 comprend un canal ouvert 12 dans lequel peut s'engager le fil conducteur électrique 11 et des ergots de rétention élastiques 13 qui permettent la fixation de l'embase sur une plaque-support (non représentée).

L'écran thermique est constitué par une plaque 14, de dimensions sensiblement identiques à celles de l'embase, pourvue de nervures 15 aptes à s'engager dans le canal de réception 12 du fil conducteur électrique pour permettre l'assujettissement de l'écran thermique à l'embase.

Dans ce mode de réalisation, la surface d'usure de la garniture de friction se situe sensiblement dans un plan P de sorte que l'écran thermique assure pleinement son rôle de protection du témoin d'usure.

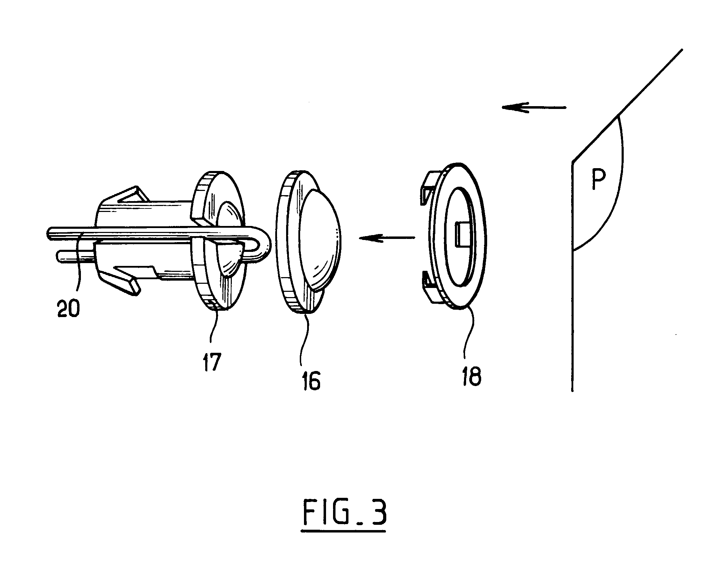

Le témoin d'usure bifilaire représenté à la figure 3 comprend une partie 16 proche de la surface d'usure P et une partie 17 éloignée de la surface d'usure P, une pièce 18 annulaire munie de pattes de sertissage 19 étant prévue pour solidariser les parties 16 et 17.

La partie 16 et la pièce 18 sont réalisées en résine phénolique tandis que la partie 17 est réalisée en PEK.

Le fil conducteur électrique 20 est logé dans une gorge s'étendant dans un plan de symétrie de la partie 17, autour de cette dernière.

La partie 16 constitue un écran thermique qui protège le reste du témoin d'usure, ainsi que le fil 20, des échauffements provenant de la surface d'usure qui se situe sensiblement dans le plan P.

A l'arrière de la partie 17, des ergots élastiques 21 sont prévus pour assurer la fixation de l'embout dans un logement d'une plaque-support (non représentée).

Il est bien entendu que les modes de réalisation qui viennent d'être décrits ne sont nullement limitatifs et qu'ils pourront recevoir toutes modifications désirables sans sortir pour cela du cadre de l'invention définie par les revendications.

En particulier, on pourrait prévoir un écran thermique qui serait solidarisé à l'embase par surmoulage de ladite embase sur cet écran thermique.

## Revendications

1. Témoin d'usure de garniture de friction, notamment de plaquette de frein, comportant un embout, apte à être assujetti à une plaque-support ou inséré dans une garniture de friction, ledit embout étant destiné à recevoir l'extrémité d'un fil conducteur électrique (1,1',11) et étant réalisé en deux parties situées sensiblement de part et d'autre d'un plan parallèle à la surface d'usure de la garniture de friction, la partie la plus éloignée de cette surface d'usure étant réalisée en un matériau élastique, la partie la plus proche de cette surface d'usure étant réalisée en un matériau résistant à de hautes températures et constituant un écran thermique (3,14) visant à protéger au moins l'extrémité du fil conducteur électrique des échauffements dus à l'usure de la garniture lors de son fonctionnement, caractérisé par le fait que la partie réalisée en matériau élastique du témoin d'usure comprend des moyens de rétention élastiques (6a,6'a,13,21) qui permettent la fixation de l'embout sur une plaque-support et que le conducteur électrique est un fil électrique comprenant une boucle d'extrémitéconductrice apte à être retenue dans ladite partie la plus éloignée de la surface d'usure.

2. Témoin d'usure selon la revendication 1, caractérisé par le fait que ladite partie la plus éloignée de la surface d'usure définit une embase (6, 9, 17) comportant des moyens (7, 12) pour recevoir la boucle d'extrémité conductrice du fil électrique.

3. Témoin d'usure selon l'une quelconque des revendications 1 et 2, caractérisé par le fait que l'on utilise, comme matériau élastique pour la partie (6, 9, 17) la plus éloignée de la surface d'usure, du PEK, du PEEK ou du PAA.

4. Témoin d'usure selon l'une quelconque des revendications 1 à 3, caractérisé par le fait que l'on utilise comme matériau résistant à de hautes températures pour la partie (3, 14, 16) la plus proche de la surface d'usure, une céramique ou une résine phénolique.

5. Témoin d'usure selon l'une quelconque des revendications 1 à 4, caractérisé par le fait que les deux parties de l'embout sont solidarisées par encliquetage.

6. Témoin d'usure selon l'une quelconque des revendications 1 à 4, caractérisé par le fait que les deux parties de l'embout sont solidarisées par sertissage.

7. Témoin d'usure selon l'une quelconque des revendications 1 à 4, caractérisé par le fait que les deux parties de l'embout sont solidarisées par surmoulage de l'une sur l'autre.

## Patentansprüche

1. Verbrauchsanzeige eines Reibbelags insbesondere eines Bremsbelags, die einen Ansatz aufweist, der daran angepasst ist, an einer Trägerfolie bzw. einer Trägerplatte befestigt zu werden oder in einen Reibbelag eingeführt zu werden, wobei der genannte Ansatz dazu bestimmt ist, die Enden eines elektrischen Leitungsdrahtes (1, 1',11) aufzunehmen und in zwei Teilen realisiert ist, die fühlbar bzw. merklich zu beiden Seiten einer Ebene platziert sind, die parallel zu einer Verbrauchsfläche des Reibbelags platziert sind, wobei der Teil der am weitesten von dieser Verbrauchsfläche entfernt ist, aus einem elastischen Material realisiert ist, der Teil, der dieser Verbrauchsfläche am nächsten aus einem Material realisiert ist, das widerstandsfähig gegenüber hohen Temperaturen ist und eine thermische Abschirmung (3,14) bildet, um wenigstens die Enden des elektrischen Leitungsdrahtes vor den Aufheizungen aufgrund der Verwendung des Belags zur Zeit seines Betriebs zu schützen, dadurch gekennzeichnet, dass der aus einem elastischen Material realisierte Teil der Verbrauchsanzeige elastische Festhaltemittel (6a,6'a,13,21) aufweist, die die Befestigung des Ansatzes auf einer Trägerplatte bzw. Trägerfolie erlauben, und dass der elektrische Leiter ein elektrischer Draht ist, der ein leitendes Schleifenende umfasst, das dazu geeignet ist, in dem genannten Teil, der am weitesten von der Verbrauchsfläche entfernt ist, gehalten zu werden.

2. Verbrauchsanzeige nach Anspruch 1, gekennzeichnet durch die Tatsache, dass der Teil, der am weitesten von der Verbrauchsfläche entfernt ist, eine Fußplatte bzw. Befestigungsfläche (6,6'9) umfasst, die Mittel (7, 12) umfasst, um das leitende Schleifenende des elektrischen Drahtes entgegenzunehmen.

3. Verbrauchsanzeige nach irgendeinem der Ansprüche 1 und 2, gekennzeichnet durch die Tatsache, dass man als elastisches Material für den Teil (6, 9, 17), der am weitesten von der Verbrauchsfläche entfernt ist, PER bzw. PEK, PEEK oder PAA verwendet.

4. Verbrauchsanzeige nach irgendeinem der Ansprüche 1 bis 3, gekennzeichnet durch die Tatsache, dass man als Material, das gegenüber hohen Temperaturen widerstandsfähig ist, für den Teil (3, 14, 16), der der Verbrauchsfläche am nächsten ist, eine Keramik oder ein Phenolharz verwendet.

5. Verbrauchsanzeige nach irgendeinem der Ansprüche 1 bis 4, dadurch gekennzeichnet, dass die zwei Teile des Ansatzes durch eine Sperrung bzw. Hemmung fest verbunden sind.

6. Verbrauchsanzeige nach irgendeinem der Ansprüche 1 bis 4, gekennzeichnet durch die Tatsache, dass die zwei Teile des Ansatzes durch eine Quetschverbindung bzw. Bördelverbindung bzw. Einpackung fest verbunden sind.

7. Verbrauchsanzeige nach irgendeinem der Ansprüche 1 bis 4, gekennzeichnet durch die Tatsache, dass die zwei Teile des Ansatzes durch Abformen des einen auf den anderen fest verbunden sind.

## Claims

1. Wear indicator for a friction lining, especially a brake pad, including a fitting, which can be attached to a support plate or inserted into a friction lining, the said fitting being intended to receive the end of an electrical conductor wire (1, 1', 11) and being made in two parts situated substantially on either side of a plane parallel to the surface of wear of the friction lining, the part furthest from this surface of wear being made from an elastic material, the part closest to this surface of wear being made from a material which is resistant to high temperatures and constitutes a thermal screen (3, 14) designed to protect at least the end of the electrical conductor wire from heating due to the wearing of the lining during the operation thereof, characterized in that the part made from an elastic material of the wear indicator comprises elastic means of retention (6a, 6'a, 13, 21) which allow the fixing of the fitting to a support plate and in that the electrical conductor is an electrical wire comprising a conducting end loop which can be retained in the said part furthest from the surface of wear.

2. Wear indicator according to Claim 1, characterized in that the said part furthest from the surface of wear defines a base (6, 9, 17) comprising means (7, 12) for receiving the conducting end loop of the electrical wire.

3. Wear indicator according to either one of Claims 1 and 2, characterized in that PEK, PEEK or PAA is used as elastic material for the part (6, 9, 17) furthest from the surface of wear.

4. Wear indicator according to any one of Claims 1 to 3, characterized in that a ceramic or a phenolic resin is used as material which is resistant to high temperatures for the part (3, 14, 16) closest to the surface of wear.

5. Wear indicator according to any one of Claims 1 to 4, characterized in that the two parts of the fitting are secured by snap-fastening.

6. Wear indicator according to any one of Claims 1 to 4, characterized in that the two parts of the fitting are secured by crimping.

7. Wear indicator according to any one of claims 1 to 4, characterized in that the two parts of the fitting are secured by overmoulding of the one over the other.
